# DEMANDE DE BREVET EUROPEEN

(11) **EP 4 187 652 A1**
(43) Date de publication de la demande: **31.05.2023**
(21) Numéro de dépôt: 22209833.7
(22) Date de dépôt: 28.11.2022
(51) Int. Cl.: H01M 8/0221, H01M 8/0226, H01M 8/0204, H01M 8/0258, H01M 8/026, H01M 4/86

(54) **PROCÉDÉ DE FABRICATION D'UN GUIDE D'ÉCOULEMENT POUR RÉACTEUR ÉLECTROCHIMIQUE, ET GUIDE D'ÉCOULEMENT ASSOCIÉ**

(30) Priorité: 30.11.2021 FR 2112706
(71) Demandeur: Commissariat à l'énergie atomique et aux énergies alternatives, 75015 Paris (FR)
(72) Inventeur: TREMBLAY, Denis, 38054 GRENOBLE Cedex 09 (FR); VINCENT, Rémi, 38054 GRENOBLE Cedex 09 (FR)
(74) Mandataire: Hautier IP

(57) **Abrégé**

L'invention concerne un procédé de fabrication d'un guide d'écoulement pour réacteur électrochimique, comprenant une fourniture d'un substrat (10), une formation d'au moins un canal d'écoulement (2) comprenant un dépôt par apport de matière, d'une composition comprenant un composé absorbeur de cations métalliques, de façon à former des nervures (211) supportées par le substrat (10), et un séchage du canal d'écoulement (2) déposé. L'invention concerne en outre notamment le guide d'écoulement, et une plaque bipolaire comprenant le guide d'écoulement. Cette solution protège physiquement le guide d'écoulement des phénomènes de corrosion. À cela s'ajoute une protection chimique par la captation des cations métalliques plus efficace que dans les solutions existantes mettant en oeuvre un revêtement. La solution proposée améliore donc la durabilité d'un réacteur électrochimique comprenant le guide d'écoulement.

## Description

### DOMAINE TECHNIQUE

La présente invention concerne la fabrication d'au moins un composant d'un réacteur électrochimique, par exemple une pile à combustible. Elle concerne plus particulièrement la réalisation des circuits fluidiques imprimés dans le cadre de la fabrication de réacteurs électrochimiques notamment destinées à une utilisation en pile à combustible, et en particulier à une utilisation en pile à combustible de température inférieure à 250°C.

### ETAT DE LA TECHNIQUE

Les piles à combustible sont envisagées notamment comme système d'alimentation électrique pour des véhicules automobiles destinés à être produits à grande échelle dans le futur, ainsi que pour un grand nombre d'autres applications. Une pile à combustible est un dispositif électrochimique qui convertit de l'énergie chimique directement en énergie électrique. Un combustible tel que du dihydrogène ou du méthanol est utilisé comme carburant de la pile à combustible.

Les piles à combustible à membrane d'échange de protons, dites PEM (abrégé de l'anglais *Proton Exchange Membrane),* fonctionnent à basse température, typiquement inférieure à 250°C et présentent des propriétés de compacité particulièrement intéressantes.

### Principe de la pile à combustible

La pile à combustible est un générateur électrochimique qui permet de convertir de l'énergie chimique en énergie électrique par une réaction d'oxydo-réduction.

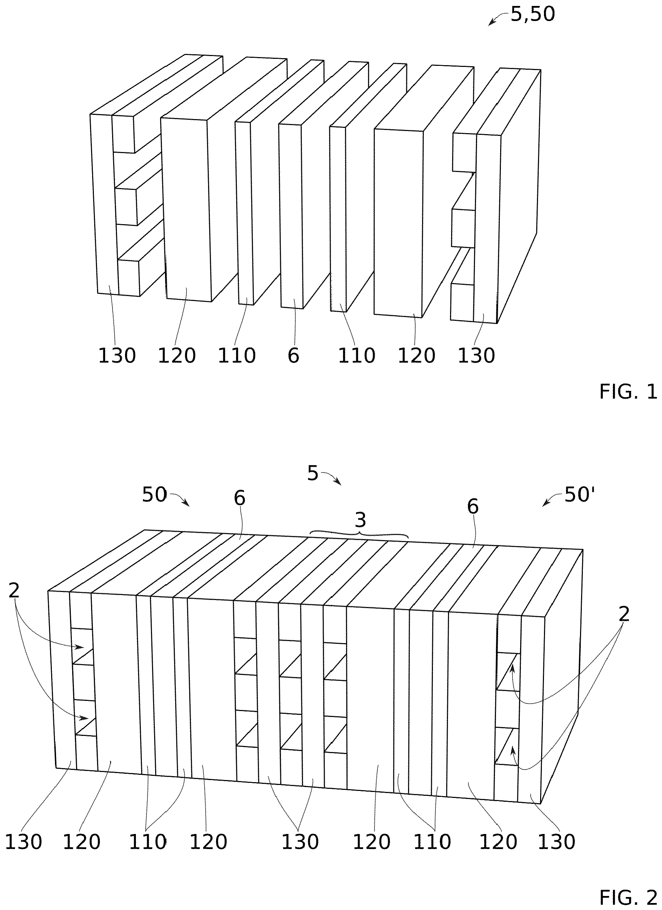

En référence à la figure 1 annexée, le cœur électrochimique 50 de la pile 5, aussi désigné par le terme cellule unitaire, est constitué de deux électrodes 110 séparées par une membrane échangeuse d'ions 6. Les électrodes 110 sont alimentées d'un réactif approprié, respectivement un combustible pour l'anode et un comburant pour la cathode, créant ainsi une réaction électrochimique à la surface des électrodes 110 qui va permettre de générer le courant électrique.

En référence à la figure 2, la pile à combustible 5 peut être constituée d'un empilement de cœurs électrochimiques 50, 50' montés en série appelé « stack ». Entre chaque empilement de cœurs électrochimiques 50, 50', une plaque bipolaire 3 peut être disposée pour alimenter les électrodes 110 en réactifs. La pile à combustible 5 peut donc être constituée d'un empilement de cellules unitaires 50, 50' séparées deux à deux par une plaque bipolaire 3.

Plus particulièrement, une pile à combustible à membrane échangeuse de protons ou PEMFC (abrégé de l'anglais « *Proton Exchange Membrane Fuel Cell* ») comprend au moins une cellule unitaire contenant un assemblage membrane-électrodes ou AME (110/6/110 sur la figure 2), comprenant une membrane électrolytique 6 permettant le passage sélectif des protons et, de part et d'autre de cette membrane 6, les électrodes 110.

La membrane 6 est généralement à base d'un ionomère perfluorosulfoné tel que le Nafion^{®}. Les électrodes 110, également appelées couches catalytiques ou actives, contiennent un catalyseur, avantageusement du platine (Pt), supporté par du carbone, et éventuellement un ionomère.

Dans une PEMFC, au niveau de l'anode, du dihydrogène (H₂) est utilisé comme carburant et est oxydé pour produire des protons traversant la membrane 6. Les électrons produits par cette réaction migrent vers le circuit fluidique, puis traversent un circuit électrique externe à la cellule 50 pour former un courant électrique. Au niveau de la cathode, de l'oxygène (O₂) est réduit et réagit avec les protons ayant traversé la membrane 6 pour former de l'eau.

Des couches de diffusion gazeuse 120 ou GDL (abrégé de l'anglais « Gaz Diffusion Layer »), classiquement en fibres de graphite, peuvent être interposées entre les électrodes 110 et les plaques bipolaires 3.

### Principe d'une plaque bipolaire

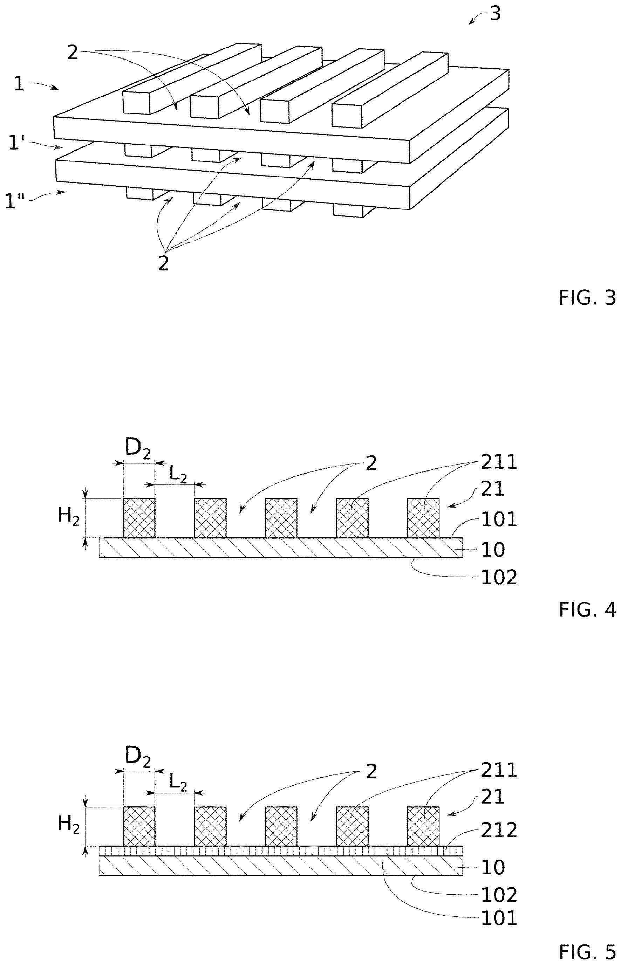

La plaque bipolaire 3 assure plusieurs fonctions, parmi lesquelles notamment, en référence aux figures 2 et 3 :
- la distribution des réactifs et l'évacuation des sous-produits formés, possiblement via des canaux 2 et/ou orifices ménagés en son sein,
- le transfert des électrons générés au niveau des anodes des différentes cellules unitaires 50, ce qui implique que la plaque bipolaire 3 soit électriquement conductrice,
- le refroidissement des cellules unitaires 50, possiblement via la circulation d'un liquide de refroidissement en son sein ;
- un support mécanique pour le cœur électrochimique 50.

On peut considérer le cas typique d'une plaque bipolaire 3 telle qu'illustrée sur la figure 3 comprenant trois circuits fluidiques, dédiés respectivement au guidage des écoulements de fluide anodique, de fluide cathodique et de fluide de refroidissement (au centre de la plaque). Le guidage des écoulements est réalisé via la mise en place d'obstacles, appelées dans la suite nervures, comme des parois ou des plots, aussi désignée couramment par « dents », qui influent sur l'écoulement du fluide. Ces nervures peuvent prendre la forme, par exemple, d'un faisceau de canaux 2 parallèles, que l'on nomme ici « circuit fluidique ». Ces nervures réalisant la connexion électrique et thermique avec le cœur de pile, elles doivent être électriquement conductrices.

Chaque circuit fluidique d'une pile à combustible est généralement constitué d'un matériau conducteur de courant qui peut être du graphite, un plastique à renfort de fibres de carbone, ou bien un métal, tel que l'acier inoxydable, un alliage métallique ou tout autre matériau conducteur de courant. Les fluides cathodique et anodique sont distribués de préférence sur toute la surface active de chaque électrode par les canaux 2 des circuits fluidiques, chaque circuit fluidique comprenant une entrée pour permettre l'amenée du fluide et une sortie pour permettre l'évacuation du fluide non réactif et des sous-produits des réactions électrochimiques.

D'autres agencements des circuits fluidiques, non détaillés ici, sont possibles. Par exemple, une plaque bipolaire 3 peut comprendre seulement deux circuits fluidiques, par exemple dédiés respectivement à chacun des deux réactifs. Par ailleurs, une plaque bipolaire 3 comprenant deux ou trois circuits fluidiques peut être constituée de plusieurs sous-ensembles disjoints, comprenant chacun au moins un circuit fluidique. Une plaque bipolaire 3 présentant les fonctions décrites précédemment est alors formée au moment de l'assemblage de la pile, lorsque les cellules sont empilées et plus particulièrement lorsqu'un effort de compression leur est appliqué.

Les guides d'écoulement peuvent être en contact avec des solutions corrosives, par exemple très acides, dans les réacteurs électrochimiques. Du côté de la cathode d'une PEMFC par exemple, le guide d'écoulement est typiquement soumise à de l'air sous pression dans un environnement hautement oxydant. Du côté de l'anode d'une PEMFC, le guide d'écoulement est en contact avec de l'hydrogène. Dans de telles conditions, les guides d'écoulements et les plaques bipolaires 3 formées à partir de ces guides subissent des phénomènes de corrosion. La corrosion entraîne la formation d'une couche d'oxyde isolante sur le guide d'écoulement, ce qui augmente notamment sa résistance de contact avec la couche de diffusion gazeuse 120. La résistance électrique entre la plaque bipolaire 3 et la couche de diffusion gazeuse 120 est alors accrue. En outre, des perforations du guide d'écoulement peuvent survenir, perturbant les circuits fluidiques de réactifs, de produits de réaction et/ou de fluide de refroidissement.

La corrosion des guides d'écoulement a par ailleurs d'autres conséquences. Les ions métalliques libérés par ce phénomène interfèrent avec les réactions d'oxydoréduction, notamment en polluant les catalyseurs par occupation des sites actifs des couches catalytiques. L'activité catalytique est alors diminuée. Les ions métalliques altèrent en outre le fonctionnement de la membrane échangeuse d'ions 6. H. Wang et J. A. Turner (H. Wang et J. A. Turner, The influence of metal ions on the conductivity of Nation 211 in PEMFC, Journal of Power Sources 183 (2008) 576-580) ont montré une baisse de la conductivité protonique de la membrane échangeuse de protons d'une PEMFC en présence d'ion fer et d'ion chrome.

Ces phénomènes induisent une réduction des performances des réacteurs électrochimiques, et notamment des piles à combustible. Afin de limiter ces phénomènes, les solutions existantes visent à protéger les guides d'écoulement au moyen d'un revêtement présentant également des propriétés de conduction électrique. Il peut notamment s'agir d'un revêtement à base de métaux nobles, ou de carbone dans une matrice polymérique. En pratique, les revêtements développés dans les solutions existantes permettent de protéger physiquement la plaque bipolaire métallique du milieu corrosif de la pile à combustible.

Le document FR3002368 A1 décrit une plaque bipolaire métallique pour PEMFC. La plaque bipolaire est formée par emboutissage avant qu'au moins une de ses faces ne soit recouverte d'un revêtement comprenant :
- des charges de matériau électriquement conducteur,
- un polymère liant,
- un composé absorbeur de cations métalliques de préférence de la famille des PFSA.

Cette solution reste en pratique reste limité pour augmenter la résistance à la corrosion et l'augmentation de la durabilité des performances de la pile.

Un objet de la présente invention est donc de proposer une solution améliorant la durabilité d'un réacteur électrochimique comprenant un guide d'écoulement.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit un procédé de fabrication d'un guide d'écoulement pour réacteur électrochimique, de préférence pour pile à combustible, plus préférentiellement encore pour pile à combustible à membrane échangeuse de protons, comprenant :
- une fourniture d'un substrat présentant une première face et une deuxième face,
- une formation d'au moins un canal d'écoulement comprenant un dépôt par apport de matière, d'une composition comprenant :
   ∘des charges de matériau électriquement conducteur,
   ∘un polymère servant de liant, ou des précurseurs dudit polymère,
   ∘un composé absorbeur de cations métalliques,
   ∘un solvant,
   de façon à former des nervures supportées par au moins l'une parmi la première face et la deuxième face du substrat, et

- un séchage du canal d'écoulement déposé.

La formation des nervures par apport de matière permet de limiter le coût de fabrication du guide d'écoulement et d'une plaque bipolaire le comprenant, ce qui représente approximativement 40% du coût total d'une pile à combustible. En outre, les dimensions du guide d'écoulement, son poids et sa forme sont plus aisément optimisables par rapport aux procédés de fabrication par usinage ou emboutissage. Le matériau formant les nervures peut en outre être adapté pour fonctionnaliser les nervures.

En effet, le volume occupé par les nervures comprend ainsi le composé absorbeur de cations métallique, au lieu juste d'un revêtement déposé en surface des nervures. Ainsi, les nervures sont faites d'un matériau formant une barrière physique au phénomène de corrosion, ainsi qu'une barrière chimique grâce au composé absorbeur de cations métalliques.

Cette approche se distingue clairement des solutions existantes mettant en œuvre un revêtement déposé sur les nervures du guide d'écoulement. Au lieu de protéger les nervures par une barrière physique, voire physico-chimique, cette solution vise à fonctionnaliser les nervures avec un absorbeur de cation métallique. Ceci présente plusieurs avantages.

Cela permet d'augmenter d'une part le volume dans lequel est présent le composé absorbeur. La quantité de composé absorbeur de cations métalliques est ainsi significativement augmentée.

D'autre part, il a été mis en évidence lors du développement de l'invention que les cations métalliques libérés par corrosion se diffusent principalement par voie solide à travers les nervures et le cas échant le substrat. La fonctionnalisation des nervures par le composé absorbeur améliore la captation des cations métalliques le long de leur chemin de diffusion, par rapport à un revêtement déposé en surface des nervures qui bloque les cations seulement en surface des nervures.

Ainsi les nervures se chargent en cations métalliques au fur et à mesure de l'utilisation du réacteur électrochimique, et notamment d'une pile à combustible, de préférence d'une PEMFC, ce qui limite la pollution de la membrane échangeuse d'ions ainsi que le blocage des sites actifs aux électrodes.

Cette solution protège physiquement le guide d'écoulement et plus particulièrement une plaque bipolaire des phénomènes de corrosion. L'augmentation de la résistance de contact avec la couche de diffusion gazeuse et le risque de perforations sont donc limités. À cela s'ajoute une protection chimique par la captation des cations métalliques plus efficace que dans les solutions existantes mettant en œuvre un revêtement. La solution proposée améliore donc la durabilité d'un réacteur électrochimique comprenant le guide d'écoulement ainsi fabriqué.

Un deuxième aspect concerne un procédé de fabrication d'une plaque bipolaire pour réacteur électrochimique, de préférence pour pile à combustible, plus préférentiellement pour pile à combustible à membrane échangeuse de protons, comprenant :
- une fabrication d'au moins trois guides d'écoulement sur au moins deux substrats, au moins un guide d'écoulement parmi les au moins trois guides d'écoulement étant fabriqué par un procédé de fabrication selon le premier aspect, et
- au moins un assemblage des au moins deux substrats entre eux de sorte que :
   ∘l'assemblage présente un des au moins trois guides d'écoulement entre deux des au moins deux substrats et deux autres des au moins trois guides d'écoulement de part et d'autre des au moins deux substrats,
   oau moins un guide d'écoulement parmi les deux guides d'écoulement de part et d'autre des au moins deux substrats étant fabriqué par le procédé de fabrication selon le premier aspect.

Un troisième aspect concerne un guide d'écoulement pour réacteur électrochimique, de préférence pour pile à combustible, plus préférentiellement pour pile à combustible à membrane échangeuse de protons, comprenant :
- un substrat présentant une première face et une deuxième face
- au moins un canal d'écoulement délimité latéralement par des nervures supportées par au moins l'une parmi la première face et la deuxième face du substrat.

Avantageusement, les nervures sont faites d'un matériau composite comprenant :
- des charges de matériau électriquement conducteur,
- un polymère servant de liant,
- un composé absorbeur de cations métalliques.

Un quatrième aspect concerne une plaque bipolaire pour réacteur électrochimique, de préférence pour pile à combustible, plus préférentiellement pour pile à combustible à membrane échangeuse de protons, comprenant un assemblage d'au moins trois guides d'écoulement, supportés par au moins deux substrats, les au moins deux substrats étant assemblés entre eux de sorte que l'assemblage présente un des au moins trois guides d'écoulement entre deux des au moins deux substrats et deux autres des au moins trois guides d'écoulement de part et d'autre des au moins deux substrats, au moins un guide d'écoulement parmi les deux guides d'écoulement de part et d'autre des au moins deux substrats étant un guide d'écoulement selon le troisième aspect..

Un cinquième aspect concerne une plaque bipolaire pour réacteur électrochimique, de préférence pour pile à combustible, plus préférentiellement pour pile à combustible à membrane échangeuse de protons, obtenue par mise en œuvre du procédé de fabrication selon le deuxième aspect.

Un sixième aspect concerne un réacteur électrochimique comprenant au moins un guide d'écoulement fabriqué selon le premier aspect, et/ou un guide d'écoulement selon le troisième aspect, et/ou une plaque bipolaire fabriquée selon le deuxième aspect, et/ou une plaque bipolaire selon le quatrième ou cinquième aspect.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente schématiquement une vue en perspective éclatée d'une partie d'une ce réacteur électrochimique, selon un exemple général.
La figure 2 représente schématiquement une vue en perspective regroupée d'un empilement de deux parties du réacteur électrochimique illustré par la figure 1.
La figure 3 représente une vue en perspective d'une partie au moins d'une plaque bipolaire destinée à être située entre deux cœurs électrochimiques du réacteur électrochimique illustré par la figure 1.
Les figures 4 et 5 représentent schématiquement des vues en coupe transversales du dépôt par apport de matière pour fabriquer un guide d'écoulement selon différents exemples de réalisation.
La figure 6 est une représentation schématique en coupe de côté d'une étape d'impression par sérigraphie pour la formation d'un motif d'impression.
Les figures 7 et 8 illustrent chacune une vue en coupe transversale d'un guide d'écoulement, selon différents exemples de réalisation.
Les figures 9 et 10 illustrent chacune une vue en coupe transversale d'une plaque bipolaire, selon différents exemples de réalisation.
La figure 11 illustre une vue en coupe schématique d'un exemple de configuration d'un guide d'écoulement selon un autre exemple de réalisation.
La figure 12 illustre une association du guide d'écoulement de la figure 11 avec d'autres composants d'un réacteur électrochimique.
La figure 13 illustre une vue en coupe schématique d'un exemple de configuration d'un guide d'écoulement selon autre exemple de réalisation.
La figure 14 illustre une association du guide d'écoulement de la figure 13 avec un autre composant d'un réacteur électrochimique.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les épaisseurs et les largeurs des différents éléments illustrés ne sont pas nécessairement représentatifs de la réalité ou de facteurs de forme réalistes.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement aux différents aspects de l'invention.

Selon un exemple, le substrat est électriquement conducteur.

Selon un exemple, les nervures sont électriquement conductrices.

Selon un exemple, la plaque bipolaire est électriquement conductrice.

Selon un exemple, le substrat est métallique, de préférence le substrat est en acier, et plus préférentiellement encore en acier inoxydable.

Selon un exemple, le composé absorbeur de cations métalliques est un polymère servant de liant. Le composé absorbeur de cation est alors un polymère servant de liant qui est en outre configuré pour absorber des cations métalliques, et plus particulièrement le composé absorbeur de cation est un ionomère. Lorsque le composé absorbeur de cation est un polymère servant de liant, le composé peut se substituer au moins partiellement au polymère servant de liant dans les nervures formées, par rapport à un composé absorbeur de type charge inorganique pouvant se substituer au matériau électriquement conducteur. La conductivité électrique n'est ainsi pas diminuée.

Selon cet exemple, le composé absorbeur de cations métalliques est un ionomère, de préférence un polymère perfluorosulfoné. Ici encore, lorsque le composé absorbeur de cation est un ionomère, le composé se substitue au polymère servant de liant dans les nervures formées, par rapport à un composé absorbeur de type charge inorganique se substituant au matériau électriquement conducteur. Un ionomère évite donc d'abaisser la conductivité électrique.

Selon un exemple alternatif, le composé absorbeur de cations métalliques n'est pas un polymère, et plus particulièrement n'est pas un polymère servant de liant.

Selon un exemple, et comme il apparait clairement dans la description, le composé absorbeur de cations métalliques présente des fonctions ou groupements ioniques et/ou ionisables, par exemple le composé absorbeur des ions métalliques est avantageusement porteur de fonctions anioniques, encore plus avantageusement sulfoniques (de formule S0₃H/S0₃⁻ : correspondant respectivement à la forme acide et salifiée). Selon un exemple, le composé absorbeur de cations métalliques est du charbon actif. Selon un exemple, le composé absorbeur de cations métalliques est un polymère comprenant des unités ioniques et/ou ionisables aptes à absorber les cations métalliques (aussi appelé ionomère). Ces unités peuvent être des groupements acides sulfoniques, par exemple sous forme acide ou salifiée.

Selon un exemple, les charges de matériau électriquement conducteur sont choisies parmi le groupe constitué de noir de carbone, graphite, fibre de carbone ou leurs dérivés, éventuellement en mélange.

Selon un exemple, le polymère servant de liant est choisi parmi le groupe constitué de : polyfluorure de vinylidène (PVdF), l'alcool polyvinylique (PVA), le polyméthylméthacrylate (PMMA), polyoxyde d'éthylène (POE), polyéthylène téréphtalate (PET), un polyacrylique, un polyimide, un polyétheréthercétone, un polyéthersulfone, une polyoléfine, le polyéthylène, un polymère de cellulose tel que la carboxyméthylcellulose ou les fibres de cellulose, un copolymères tel que le PVdF-HFP (hexafluoropropylène) ou le PVdF-POE, un latex acrylique, un caoutchouc synthétique tel que le styrène-butadiène (SBR) et le butadiène-acrylonitrile (NBR, de l'anglais nitrile butadiene rubber), un résine époxy, une résine polyuréthane, leurs dérivés et/ou leurs mélanges. Comme il apparaît clairement à la lecture de la description, il est à noter que ces composés ne sont pas aptes à absorber des cations métalliques. Lorsque le composé absorbeur de cation est un polymère servant de liant, le composé absorbeur de cation est distinct des polymères listés ci-dessus.

Selon un exemple, la composition et le matériau composite comprennent un mélange de plusieurs polymères servant de liant, par exemple choisis dans le groupe ci-dessus.

Selon un exemple, le solvant est apte à dissoudre le polymère servant de liant, par exemple le solvant est choisi parmi le groupe constitué de N-méthyl-2-pyrrolidone (NMP), triéthyle phosphate (TEP), N,N-diméthylformamide (DMF),_diméthylsulfoxyde (DMSO), leurs dérivés et/ou leurs mélanges.

Selon un exemple, la composition comprend, en poids par rapport au poids total de la composition, une proportion comprise entre 1 % et 4 % de composé absorbeur de cations métalliques. Lors du développement de l'invention, il a été mis en évidence que cette gamme, de façon synergique avec le volume dans lequel est présent le composé absorbeur, permet une bonne captation des cations métalliques dans les nervures.

Selon un exemple, la composition comprend, en poids par rapport au poids total de la composition :
- une proportion comprise entre 30 % et 50 % de charges de matériau électriquement conducteur
- une proportion comprise entre 1 % et 4 % de polymère servant de liant,
- une proportion comprise entre 45 % et 65 % de solvant.

Selon un exemple, lorsque le composé absorbeur de cations métalliques est un polymère servant de liant, la proportion comprise entre 1 % et 4 % de composé absorbeur de cations métalliques fait partie de la proportion de polymère servant de liant. On comprend donc que la composition peut comprendre les charges de matériau électriquement conducteur, le composé absorbeur de cation servant en outre de polymère servant de liant, et le solvant. Il n'y a alors pas de polymère servant de liant additionnel. Selon un autre exemple, la composition peut comprendre les charges de matériau électriquement conducteur, le composé absorbeur de cation, un polymère servant de liant distinct du composé absorbeur de cations, et le solvant.

Selon un exemple alternatif, lorsque le composé absorbeur de cations métalliques n'est pas un polymère servant de liant, la proportion comprise entre 1 % et 4 % de composé absorbeur de cations métalliques est une proportion additionnelle à la proportion de polymère servant de liant.

La composition permet ainsi d'ériger des motifs et permet d'obtenir après l'étape de séchage des proportions offrant une bonne tenue à l'utilisation des nervures. Ces proportions sont en outre particulièrement adaptées à un dépôt des nervures par impression, et notamment par sérigraphie.

Selon un exemple, le dépôt de la composition est un dépôt par impression.

Selon un exemple, le dépôt de la composition est un dépôt par sérigraphie, et plus préférentiellement par sérigraphie par écran maillé

Selon un exemple, la composition présente une viscosité comprise entre 70 et 500 Pa.s pour une vitesse de cisaillement de 0,1 s⁻¹, et la viscosité de l'encre imprimée étant comprise entre 2,5 et 7 Pa.s pour une vitesse de cisaillement de 100 s⁻¹.

Selon un exemple, le matériau composite comprend, en poids sec par rapport au poids sec du matériau, une proportion comprise entre 1 % et 10 % de composé absorbeur de cations métalliques. Lors du développement de l'invention, il a été mis en évidence que cette gamme, de façon synergique avec le volume dans lequel est présent le composé absorbeur, permet une bonne captation des cations métalliques dans les nervures.

Selon un exemple, le matériau composite comprend, en poids sec par rapport au poids sec du matériau :
- une proportion comprise entre 70 % et 98 % de charges de matériau électriquement conducteur,
- une proportion comprise entre 2 % et 30 % de polymère servant de liant. Ces proportions offrent une bonne tenue mécanique à l'utilisation des nervures.

Selon un exemple, lorsque le composé absorbeur de cations métalliques est un polymère servant de liant, la proportion comprise entre 1 % et 10 % de composé absorbeur de cations métalliques fait partie de la proportion de polymère servant de liant.

Selon un exemple alternatif, lorsque le composé absorbeur de cations métalliques n'est pas un polymère servant de liant, la proportion comprise entre 1 % et 10 % de composé absorbeur de cations métalliques est une proportion additionnelle à la proportion de polymère servant de liant.

Selon un exemple, les nervures présentent une hauteur, prise selon une direction sensiblement perpendiculaire au plan d'extension principale du substrat, supérieure ou égale à 100 µm, de préférence supérieure ou égale à 200 µm.

Selon un exemple, les nervures s'étendent depuis le substrat.

Selon un exemple, le substrat étant au moins en partie recouvert d'un revêtement, de préférence comprenant un composé absorbeur de cation métallique, et au moins une partie, et de préférence la totalité, des nervures s'étendent depuis le revêtement.

Selon un exemple, le réacteur électrochimique est une pile à combustible, de préférence à membrane échangeuse de protons.

Selon un exemple, le composé absorbeur des cations métalliques et le même ionomère que celui constitutif de la membrane et/ou que celui présent dans les couches catalytiques.

Dans la suite de la description, les termes « sur », « supporté » ou « en contact »ne signifient pas nécessairement « directement » sur, supporté ou en contact. Ainsi, lorsque l'on indique qu'une pièce ou qu'un organe A est en appui « sur » une pièce ou un organe B, cela ne signifie pas que les pièces ou organes A et B soient nécessairement en contact direct avec l'autre. Ces pièces ou organes A et B peuvent être soit en contact direct soit être en appui l'une sur l'autre par l'intermédiaire d'une ou plusieurs autres pièces. Par exemple, l'expression « des nervures supportées par un substrat » peut signifier que les nervures sont au contact du substrat directement ou par l'intermédiaire d'une couche disposée entre les nervures et le substrat, par exemple une couche de revêtement.

Dans la présente demande de brevet, lorsque l'on indique que deux pièces sont distinctes, cela signifie que ces pièces sont séparées. Elles peuvent être :
- positionnées à distances l'une de l'autre, et/ou
- mobiles l'une par rapport à l'autre et/ou
- solidaires l'une de l'autre en étant fixées par des éléments rapportés, cette fixation étant démontable ou non.

Une pièce unitaire monobloc ne peut donc pas être constituée de deux pièces distinctes.

On entend par un paramètre « sensiblement égal/supérieur/inférieur à » une valeur donnée que ce paramètre est égal/supérieur/inférieur à la valeur donnée, à plus ou moins 20%, voire 10%, près de cette valeur. On entend par un paramètre « sensiblement compris entre » deux valeurs données que ce paramètre est au minimum égal à la plus petite valeur donnée, à plus ou moins 20 %, voire 10 %, près de cette valeur, et au maximum égal à la plus grande valeur donnée, à plus ou moins 20 %, voire 10 %, près de cette valeur.

Les différents aspects de l'invention sont maintenant décrits selon plusieurs exemples de réalisations particuliers, en référence aux figures 3 à 14.

Comme décrit en introduction, et illustré à titre d'exemple par la figure 3, le guide d'écoulement 1 est destiné, par ces canaux d'écoulement à former au moins en partie un circuit fluidique d'un réacteur électrochimique 5. Plusieurs guides d'écoulement 1, 1', 1" peuvent être assemblés entre eux pour former une plaque bipolaire 3. Notons que la plaque bipolaire peut aussi bien être appelée « plaque d'écoulement » ou « plaque collectrice de courant ». Le réacteur électrochimique 5 peut être tout type de réacteurs électrochimiques comprenant au moins un circuit fluidique, notamment pour l'amenée des réactifs et l'évacuation des produits de la réaction et/ou la circulation d'un fluide de refroidissement. Parmi ces réacteurs électrochimiques, on compte non seulement des piles à combustible, mais également, à titre d'exemple additionnel, des électrolyseurs. De préférence le réacteur électrochimique est une pile à combustible, et plus préférentiellement une PEMFC.

### Exemple de procédé de fabrication du guide d'écoulement

En référence aux figures 4 à 6, le procédé selon le premier aspect de l'invention comprend tout d'abord les étapes suivantes :
- une fourniture d'un substrat 10 présentant une première face 101 et une deuxième face 102,
- une formation d'au moins un canal d'écoulement 2 comprenant un dépôt par apport de matière d'une composition, de façon à former un motif 21 de nervures 211 supportées par la première face 101 et/ou la deuxième face 102 du substrat 10,
- un séchage du canal d'écoulement 2 déposé, de façon à évaporer le solvant contenu dans la composition.

Les nervures 211 sont ainsi faites à partir de la composition. Le dépôt par apport de matière permet d'obtenir un motif 21 de nervures 211, aussi appelées aussi dents, sur la face 101 d'un substrat 10, de sorte à obtenir un circuit fluidique électriquement conducteur.

La composition comprend :
- des charges de matériau électriquement conducteur,
- un polymère servant de liant, ou des précurseurs de celui-ci,
- un composé absorbeur de cations métalliques, configuré pour absorber ces cations métalliques,
- un solvant.

Par précurseurs, on entend des monomères à partir desquels le polymère servant de liant peut être obtenu par polymérisation. Une fois polymérisé, le polymère forme une matrice polymérique et/ou jouant le rôle de liant, dans lequel les charges et le composé absorbeur de cation sont dispersés. Une fois polymérisé, le polymère peut plus particulièrement former une matrice polymérique et/ou jouant le rôle de liant capable de conférer une résistance mécanique acceptable au matériau composite formant les nervures 211. Par ailleurs, un tel polymère doit résister aux conditions de fonctionnement du réacteur électrochimique 5. Notons qu'un mélange de polymères peut également être envisagé.

Lorsque le composé absorbeur de cation est un polymère servant de liant, il forme une matrice polymérique et/ou jouant le rôle de liant, éventuellement avec un autre polymère servant de liant, dans lequel les charges sont dispersés. Le composé absorbeur en tant que polymère servant de liant présente en outre la caractéristique d'être apte à absorber les cations métalliques. Ici encore, la matrice polymérique et/ou le rôle de liant peut permettre de conférer une résistance mécanique acceptable au matériau composite formant les nervures 211.

Le polymère servant de liant peut plus particulièrement être choisi parmi : le polyfluorure de vinylidène (PVdF), l'alcool polyvinylique (PVA), le polyméthylméthacrylate (PMMA), polyoxyde d'éthylène (POE), polyéthylène téréphtalate (PET), un polyacrylique, un polyimide, un polyétheréthercétone, un polyéthersulfone, une polyoléfine, le polyéthylène, un polymère de cellulose tel que la carboxyméthylcellulose ou les fibres de cellulose, un copolymères tel que le PVdF-HFP (hexafluoropropylène) ou le PVdF-POE, un latex acrylique, un caoutchouc synthétique tel que le styrène-butadiène (SBR) et le butadiène-acrylonitrile (NBR, de l'anglais *nitrile butadiene rubber),* un résine époxy, une résine polyuréthane, ou leurs dérivés. Notons que les polymères listés ici ne sont pas configurés pour absorber des cations métalliques. Cela apparait clairement à l'homme du métier en considérant la structure chimique des polymères listés ici.

Pour conférer le caractère électriquement conducteur recherché pour les nervures 211, la composition comprend également des charges de matériau électriquement conducteur, avantageusement incluses dans la matrice polymérique. Ces charges peuvent être constituées de noir de carbone, de graphite, de fibres de carbone, ou de leur mélange. De manière avantageuse, ces charges se présentent sous forme de particules ayant une taille micrométrique, c'est à dire dont au moins 50 % des particules présentent une dimension sensiblement inférieure ou égale à 1000 µm, et de préférence sensiblement inférieure ou égale à 100 µm. Les particules présentent de préférence au moins une dimension comprise entre 3 et 50 µm. En alternative ou en complément, des particules de taille nanométrique, c'est à dire dont au moins 50 % des particules présentent une dimension sensiblement inférieure ou égale à 1000 nm, de préférence au moins une dimension sensiblement inférieure à 100 nm, peuvent être mises en œuvre.

La composition comprend en outre un solvant dit « solvant véhicule ». Le solvant véhicule est de préférence configuré pour solubiliser le polymère jouant le rôle de liant et/ou du composé absorbeur de cations. Pour cela, le solvant véhicule peut être tout solvant apte à solubiliser les polymères énoncés plus haut. Par exemple, le solvant peut être choisi parmi : N-méthyl-2-pyrrolidone (NMP), triéthyle phosphate (TEP), N,N-diméthylformamide (DMF),_diméthylsulfoxyde (DMSO), et leurs dérivés et/ou leurs mélanges.. Il peut s'agir d'un mélange de solvants. Dans la composition, la proportion massique en matière sèche est typiquement comprise entre 20 % et 55 %, dépendant notamment du procédé de dépôt, le solvant constituant alors de 45 à 80% en poids par rapport au poids total de la composition. Selon un exemple, la proportion massique en matière sèche de la composition est sensiblement égale à 50% en poids par rapport au poids total de la composition. Ceci est particulièrement avantageux pour obtenir un dépôt plus épais, notamment lors d'une impression par sérigraphie. Ainsi, la composition est particulièrement adaptée pour un dépôt par impression, et plus particulièrement par sérigraphie, comme décrit ultérieurement.

Dans la composition, les proportions massiques des charges de matériau conducteur, du polymère liant et du composé absorbeur des cations métalliques sont telles que, après évaporation du solvant véhicule lors de l'étape de séchage, leurs proportions massiques dans le matériau composite présentent les valeurs indiquées ci-dessous.

Le matériau composite peut être obtenu directement après l'étape de séchage. En alternative, l'étape de séchage peut être suivie d'un traitement additionnel, par exemple d'un recuit et/ou d'un traitement comprenant l'irradiation de la composition par un rayonnement ultraviolet UV ou infra-rouge IR. Ces traitements peuvent être simultanés ou successifs. L'étape de séchage peut notamment permettre de sécher suffisamment la composition pour permettre la manipulation, par exemple par un opérateur, du substrat 10. Le traitement additionnel peut ensuite être configuré pour :
- poursuivre l'évaporation du solvant véhicule et/ou
- amorcer ou poursuivre la polymérisation, éventuellement la réticulation, du polymère servant de liant. Cela peut s'appliquer aussi au composé absorbeur de cations métallique lorsque qu'il est de nature polymérique comme décrit plus loin.

L'étape de séchage peut être configurée pour évaporer au moins en partie, et de préférence totalement, le solvant véhicule. Selon un exemple, l'étape de séchage peut être configurée pour évaporer au moins 80 %, de préférence au moins 90 %, de la masse du solvant véhicule par rapport à sa masse dans la composition déposée. L'étape de séchage peut par exemple être réalisée en étuve à une température sensiblement égale à 80°C pendant un temps sensiblement égal à 10 minutes.

La proportion massique des charges conductrices dans le matériau composite est de préférence comprise entre 70 et 98% (poids sec des charges par rapport au poids sec du matériau composite).

La proportion massique de polymère servant de liant dans le matériau composite est de préférence comprise entre 2 et 30% (poids sec des charges par rapport au poids sec du matériau composite).

Ces proportions relatives de charges conductrices et de polymère permettent d'obtenir des nervures 211 faites du matériau composite qui se tiennent, notamment pour les dimensions de nervures qui seront décrites plus loin. Ces proportions relatives confèrent en outre de bonnes propriétés mécaniques et une bonne tenue à l'utilisation des nervures 211. Les nervures peuvent notamment présenter moins de 10 % de déformation sous 1MPa de contrainte totale, par rapport aux dimensions initiales des nervures 211.

Le matériau composite présente également la propriété d'absorber les ions métalliques, en particulier les cations métalliques susceptibles d'être relargués par la plaque métallique en présence. Dans le cas d'un substrat 10 en acier, il s'agit notamment des ions ferrique (Fe³⁺), des ions chrome (Cr³⁺), et éventuellement des ions nickel (Ni²⁺) ou molybdène (Mo²⁺). Pour cela, la composition et le matériau composite comprennent un composé apte à absorber des cations métalliques.

De manière générale, le composé absorbeur des cations métalliques représente avantageusement entre 1 et 10% en poids du matériau composite (poids sec du composé absorbeur des cations métalliques par rapport au poids sec du matériau composite), de préférence entre 5 et 10%. Le composé absorbeur des cations métalliques peut représenter entre 1 et 4 % en poids de la composition (poids du composé absorbeur des cations métalliques par rapport au poids totale de la composition).

Selon un premier exemple, le composé absorbeur peut être du charbon actif apte à absorber les ions métalliques, notamment en raison de sa porosité élevée.

Selon un autre exemple préféré, le composé absorbeur des cations métalliques présente des fonctions ou groupements ioniques et/ou ionisables. Dans le cas particulier où le composé est un polymère, celui-ci peut comprendre des unités ioniques et/ou ionisables, constituant ainsi un ionomère.

Au vu de la nature cationique des ions métalliques en présence, le composé absorbeur des ions métalliques est avantageusement porteur de fonctions anioniques, encore plus avantageusement sulfoniques (de formule S0₃H/S0₃⁻). En pratique, une réaction de complexation a lieu entre le cation métallique M⁺ et la fonction S0₃⁻ du composé absorbeur, avec un équilibre fortement déplacé vers la formation d'un couple d'ion-ligand.

Selon un exemple cette fonction d'absorption des cations métalliques peut être assurée directement par un polymère jouant le rôle de liant. Dans ce cas particulier, le matériau composite comprend, voire même est constitué de, un ionomère capable d'absorber les cations métalliques et de jouer le rôle de liant, ainsi que des charges de matériau électriquement conducteur. Selon un autre exemple, le polymère jouant le rôle de liant et le composé absorbeur de cations métalliques sont deux molécules différentes. On peut prévoir en outre que le polymère jouant le rôle de liant et le composé absorbeur de cations métalliques sont deux molécules différentes, le composé absorbeur de cations métalliques étant aussi un polymère servant de liant.

De préférence, le composé absorbeur des cations métalliques est de nature polymérique, et de préférence un ionomère absorbeur de cations. Dans le cadre de l'invention, on entend par « ionomère absorbeur de cations », un ionomère dont les groupements ionisés et/ou ionisables permettent notamment d'absorber les ions métalliques chargés positivement.

Dans ce cas de figure, le polymère servant de liant et l'ionomère absorbeur des cations métalliques peuvent avantageusement représenter entre 2 et 30% en poids du matériau composite (poids sec des polymères par rapport au poids sec du matériau composite). À l'intérieur de la composante polymérique du matériau composite, l'ionomère absorbeur des cations métalliques peut avantageusement représenter entre 1 et 10% en poids du matériau (poids sec de l'ionomère absorbeur des cations métalliques par rapport au poids sec du matériau composite), de préférence entre 5 et 10%.

Le composé absorbeur de cation peut notamment être un polymère dont la chaîne principale comprend des groupements C-Fₙ (n= 1 ou 2). Ces groupements peuvent en outre être porteurs de groupements acide sulfonique, sous forme acide ou salifiée. Il peut notamment s'agir d'un polymère perfluorosulfoné, aussi désigné par acide sulfonique perfluoré (PFSA pour « *PerFluoro Sulfonic Acid»).* Les PFSA sont des ionomères fluorés dérivés de l'acide perfluorosulfoné, comprenant des groupements sulfonates S0₃⁻.

Les ionomères de la famille des PFSA sont particulièrement efficaces pour capter les ions métalliques pouvant être libérés lors des phénomènes de corrosion. De manière générale, les polymères PFSA ont une formule semi-développée -[CF₂-CF₂]ₓ-[CF(O-R^{f}-S0₃H)-CF₂]_{y}, dans laquelle R^{f} est un groupement carboné fluoré, x et y étant des nombres entiers positifs non nuls.

De tels ionomères sont disponibles commercialement par exemple sous le nom de Nafion^{®} (Dupont), Aquivion^{®} (Solvay), Flemion^{®} (Asahi Glass), Fumion^{®} (Fumatech), ou Aciplex^{®} (Asahi Chemical Company).

Un ionomère particulièrement adapté est un dérivé tétrafluoroéthylène sulfoné, par exemple commercialisé sous le nom de Nafion^{®} (Dupont). À titre d'exemple, le produit Nafion^{®} D2020 possédant un numéro CAS 31175-20-9 peut être mis en œuvre dans le cadre de la présente invention.

À titre d'exemple, la structure chimique du Nafion^{®} est la suivante : 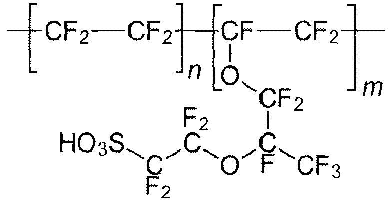 avec n et m des nombres entier positif non nuls.

Un autre ionomère adapté est un copolymère de tétrafluoroéthylène et de Sulfonyl Fluoride Vinyl (VSF), par exemple commercialisé sous le nom d'Aquivion^{®} (Solvay), sous le numéro CAS 111173-25-2.

La structure chimique de l'Aquivion^{®} est la suivante : 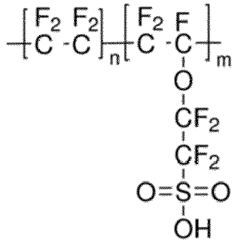 avec n et m des nombres entier positif non nuls.

Selon un exemple, l'ionomère dans le matériau composite et la composition est identique à celui compris dans la membrane échangeuse d'ions 6, et éventuellement que celui présent dans les couches catalytiques 110 du réacteur électrochimique 5, notamment dans le cas où le réacteur est une PEMFC. Notons qu'en alternative il est tout à fait possible que l'ionomère dans le matériau composite et la composition soit différent de celui compris dans la membrane échangeuse d'ions 6, et/ou dans les couches catalytiques 110 du réacteur électrochimique 5

Dans le cas où il s'agit du même ionomère que celui constituant la membrane échangeuse d'ions 6, la quantité d'ionomère présent dans le matériau composite peut être exprimée en % en poids par rapport au poids de la membrane. De manière avantageuse, la proportion massique de l'ionomère dans le matériau composite peut représenter de 1 % à 60 % du poids de la membrane échangeuse d'ion, par exemple entre 5 % et 60 %, par exemple entre 10 % et 60 %. Lors du développement de l'invention, il a en effet été mis en évidence qu'une diminution significative de la pollution de la membrane échangeuse d'ions 6 pouvait être obtenue dès ces proportions. À titre d'exemple, sur une surface de 220 cm² de nervures, 10 % de Nafion^{®} correspond à 25 mg de Nafion^{®}. La membrane pèse 500 mg. Les nervures 211, contiennent donc l'équivalent de 5 % de Nafion^{®} de la membrane.

Une composition particulièrement adaptée a été trouvée lors du développement de l'invention, comprenant 91% de noir de carbone, 4% de PVDF, et 5% de Nafion^{®}, en pourcentage massique par rapport au poids sec de la composition. Le matériau composite des nervures peut présenter des proportions identiques, en pourcentage massique par rapport au poids sec du matériau composite.

Le dépôt par apport de matière de la composition consiste à réaliser les nervures 211 par dépôt de la composition sur un substrat 10 pour former un guide d'écoulement 1. La plaque bipolaire 3 peut ensuite être formée à partir d'au moins deux guides d'écoulement 1, 1', 1". Ce procédé permet, en variante, de réaliser le circuit fluidique sur la couche de diffusion gazeuse 120, en dehors de la plaque bipolaire 3, comme décrit plus en détail ultérieurement.

En référence aux figures 4 et 5, le dépôt peut être configuré pour former des motifs 21, et plus particulièrement les nervures 211 présentant une hauteur H₂, prise selon une direction sensiblement perpendiculaire au plan d'extension principale du substrat 10, supérieure ou égale à 100 µm, de préférence supérieure ou égale à 200 µm. De façon équivalente, le matériau composite des nervures 211 peut présenter une hauteur supérieure ou égale à 100 µm, de préférence supérieure ou égale à 200 µm, et de préférence inférieure à 500 µm. La hauteur H₂ peut être inférieure à 500 µm. Les nervures 211 peuvent présenter une largeur D₂ supérieure ou égale à 200 µm, prise sensiblement perpendiculairement à la direction principale d'extension du canal d'écoulement 2, dans un plan parallèle au plan d'extension principale du substrat 10. D₂ est de préférence inférieure ou égale à 2 mm. L'espacement L₂ entre les nervures 211 peut être supérieur ou égal à 200 µm, pris sensiblement perpendiculairement à la direction principale d'extension du canal d'écoulement 2, dans un plan parallèle au plan d'extension principale du substrat 10. L₂ est de préférence inférieur ou égal à 2 mm. Par rapport à un revêtement présentant une épaisseur de l'ordre de 10 µm, des nervures 211 présentant une hauteur H₂ de l'ordre de 200 µm permettent d'augmenter d'un facteur 10 la quantité d'absorbeur de cation métallique pour un pourcentage massique égal respectivement dans le revêtement et le matériau composite.

Pour cela, le dépôt peut être configuré pour déposer une épaisseur de la composition choisie de sorte que, après séchage, les nervures présentent les dimensions présentées ci-dessus. Un facteur 2 sur les dimensions des nervures peut être observé entre la composition avant et après séchage. Par exemple, en prenant en compte la rétractation du motif 21 due à l'évaporation du solvant, une épaisseur de 400 µm peut être déposée pour obtenir une hauteur de 200 µm après séchage, voir après séchage et un traitement additionnel.

Le dépôt par apport de matière peut être un dépôt par impression, par exemple par impression en trois dimensions par un robot de dépôt.

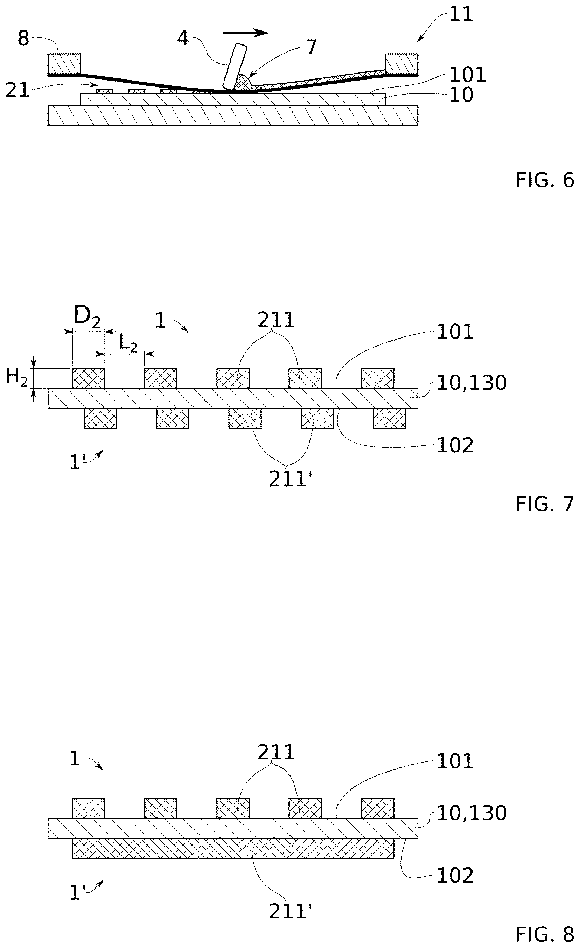

De préférence, le dépôt de la composition est un dépôt par sérigraphie, à titre d'exemple décrit dans la demande FR3085800 A1, et de préférence le dépôt de la composition est un dépôt par sérigraphie par écran maillé. Selon cet exemple et en référence à la figure 6, l'impression de circuits fluidiques se fait alors grâce à l'utilisation d'un masque de sérigraphie 11 contenant l'image du circuit fluidique à imprimer. On fait passer la composition 7, de préférence à thixotropie très élevée, à travers ce masque 11, et l'impression permet de déposer des motifs 21 de nervures, appelées aussi dents, sur la face 101 du substrat 10, de sorte à déposer les nervures 211 formant le motif 21.

Plus particulièrement, la sérigraphie par écran maillé (désigné par *mesh* en anglais) est basée sur l'utilisation d'un masque ou écran 11 constitué de deux composants principaux : un maillage (« *mesh* ») et une émulsion. Le maillage, tendu à l'intérieur d'un cadre 8, est le support mécanique de l'écran 11. Sa porosité est définie pour qu'il puisse être facilement traversé par la composition. L'émulsion est un dépôt réalisé sur le maillage, et imprégnant le maillage à l'endroit de son dépôt, de manière à former une couche étanche à la composition 7. Les vides présents dans cette couche d'émulsion sont destinés à être remplis par la composition 7 au moment de la sérigraphie. L'épaisseur de la couche d'émulsion détermine en grande partie l'épaisseur de la couche de composition déposée.

Il est alors préférable que la composition puisse être qualifiée d'encre à thixotropie très élevée. Plus particulièrement, la composition peut être caractérisée par le fait que son impression par sérigraphie puisse effectivement être réalisée en lui appliquant, de la façon illustrée sur la figure 6, une contrainte de cisaillement par exemple par une racle 4, la composition présentant :
- une viscosité sensiblement comprise entre 70 et 500 Pa.s lorsqu'une vitesse de cisaillement sensiblement égale à 0,1 s⁻¹ lui est appliquée, et
- une viscosité sensiblement comprise entre 2,5 et 7 Pa.s lorsqu'une vitesse de cisaillement sensiblement égale à 100 s⁻¹ lui est appliquée.

Comme illustré par la figure 5, le procédé peut comprendre préalable au dépôt par apport de matière des nervures 211, un dépôt d'un revêtement 212 recouvrant au moins en partie une face 101 du substrat 10. Ce revêtement 212 peut en alternative ou en complément recouvrir la face 102 du substrat 10. Le revêtement 212 peut être configuré pour former une barrière physique à la corrosion tel que décrit en introduction, et de préférence comprendre en outre un composé absorbeur de cations métallique. Un exemple de revêtement 212 et son procédé de dépôt sont décrits dans la demande FR3002368 A1. Le canal d'écoulement 2 peut être délimité latéralement par les nervures 211 et présenter un fond formé par le revêtement 212. La protection à la corrosion du substrat 10 est ainsi améliorée. La captation des ions métallique est améliorée par augmentation en augmentant le volume de matériau susceptible de capter els cations métalliques.

En alternative le fond du canal d'écoulement 12 peut être formé par la face 101 du substrat 10. Comme les cations métalliques diffusent principalement par les nervures 211 comprenant le composé absorbeur de cations, le fait que le fond du canal 2 ne soit pas pourvu de composé absorbeur de cation n'empêche pas de limiter la pollution du réacteur 5, et notamment de sa membrane 6 et/ou des couches catalytiques 110, par les cations.

Notons qu'il est possible de prévoir qu'un revêtement, non-illustré sur les figures, recouvre au moins en partie les nervures 212.

Il est en outre possible de répéter le procédé de fabrication sur la deuxième face 102 du substrat 10, opposée à la première face 101 de sorte à fabriquer sur cette face 102 un deuxième guide d'écoulement 1', par exemple d'une des façons illustrées sur les figures 7 et 8.

### Exemples de guide d'écoulement

Des exemples de guides d'écoulement 1, 1', 1" sont maintenant décrits en références aux figures 7, 8 et 11.

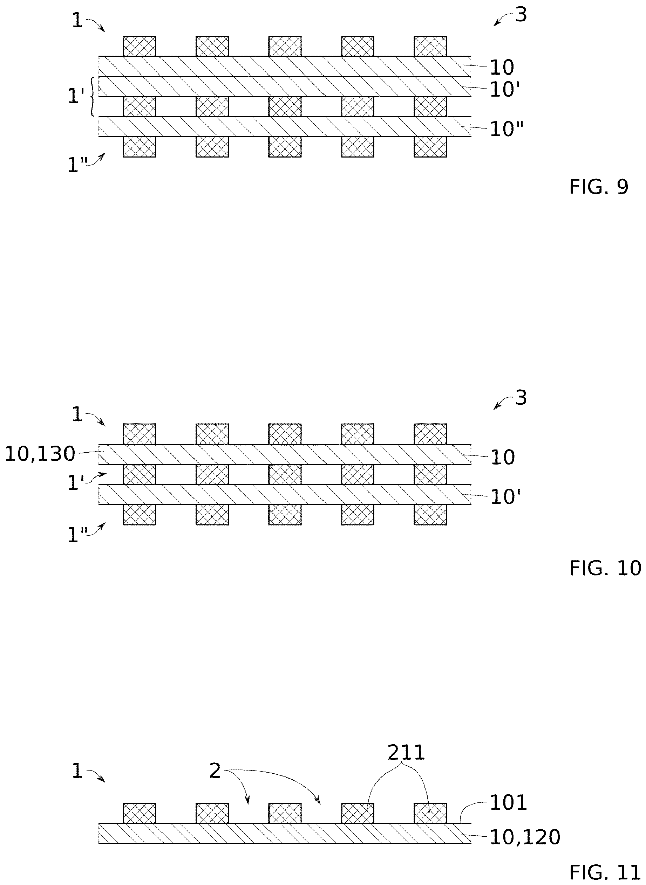

Comme par exemple illustré par les figures 7 et 8, le substrat 10 peut être une plaque électriquement conductrice 130. L'épaisseur de la plaque électriquement conductrice 130 peut être comprise entre 1 et 4 mm. Notons ici que ces exemples de réalisation sont plus particulièrement adaptés à un substrat 10 comprenant, ou étant constitué de, une simple plaque électriquement conductrice 130, par opposition à une couche d'électrode 110 et une couche de diffusion gazeuse 120 pour réacteur électrochimique, décrit plus en détail ultérieurement en référence à la figure 11.

Une telle plaque électriquement conductrice 130 peut par exemple être à base d'un métal par exemple choisi parmi l'acier inoxydable, l'aluminium, ou le titane. La plaque 130 peut être à base d'un matériau composite électriquement conducteur. La plaque 130 peut par exemple être protégée par un dépôt carboné ou métallisé ou un polymère composite conducteur d'électrons incluant une couche de métallisation, pour protéger la plaque 130 contre la corrosion ou pour diminuer les résistances de contact. La plaque 130 peut être plus ou moins rigide. Elle a de préférence une épaisseur comprise entre 0,01 et 1 mm, préférentiellement comprise entre 0,02 et 0,1mm.

Dans l'exemple illustré par la figure 7, un premier guide d'écoulement 1 a été fabriqué par mise en œuvre du procédé selon le premier aspect de l'invention sur une face supérieure 101 de la plaque électriquement conductrice 130 et un seconde guide d'écoulement 1' a été fabriqué sur une face inférieure 102 de la plaque 130. Des canaux d'écoulement sont ainsi ménagés de part et d'autre de la plaque 130 entre les nervures. On comprend que pour deux guides d'écoulement 1, 1', leur substrat 10 peut être le même.

Selon un exemple non-illustré, les nervures 211, 211' des deux faces opposées s'étendent de façon parallèle, présentent de mêmes dimensions et sont situées en visà-vis : les nervures des deux faces sont le symétrique les unes des autres par rapport à la plaque 130.

Dans l'exemple illustré par la figure 7, les nervures 211, 211'des deux faces opposées s'étendent de façon parallèle et présentent de mêmes dimensions, mais sont décalées selon une direction perpendiculaire à leur direction principale d'extension.

Dans l'exemple de la figure 8, les nervures 211, 211' des deux faces opposées s'étendent selon des directions perpendiculaires.

Ces exemples ont vocation à montrer que toute variation entre premier guide d'écoulement 1 fabriqué sur la première face 101 du substrat 10 et deuxième guide d'écoulement 1' fabriqué sur la deuxième face 102 du substrat 10 est envisageable, la fabrication d'un des guides d'écoulement 1 et 1' selon l'une quelconque des variantes du premier aspect de l'invention ne contraignant pas la fabrication de l'autre selon l'une quelconque des variantes du premier aspect de l'invention.

La figure 11 est une vue en coupe schématique d'un guide d'écoulement 1 selon un autre exemple de réalisation. Le substrat 10 sur lequel les nervures 211 ont été déposées est ici une couche de diffusion gazeuse 120. Les nervures peuvent être disposées sur une face 101 de la couche de diffusion gazeuse 120, par exemple avec des paramètres d'impression similaires à ceux décrits plus haut. L'on obtient, sur la couche de diffusion gazeuse 120, un guide d'écoulement 1 par mise en œuvre d'une des variantes décrites plus haut du procédé de fabrication selon le premier aspect l'invention.

Un paramètre caractérisant les nervures 211 n'a pas encore été discuté ci-dessus. Il s'agit de la longueur de ses éléments 211, ou plus généralement de leur dimension selon la direction d'extension principale du canal d'écoulement 2. Ce paramètre n'a pas d'autres limites que celles liées à la longueur du canal d'écoulement 2.

Un exemple de mise en œuvre du procédé selon le premier aspect de l'invention permet la fabrication d'un canal d'écoulement 2 ayant :
- Une largeur D₂ de nervure 221 de 400 µm,
- Un espacement L₂ de 400 µm entre deux nervures 221,
- Une hauteur H₂ de nervure 221 de 200 µm.

### Exemples de plaques bipolaires

Les plaques bipolaires présentent de préférence une conductivité électrique élevée, tout en étant protégées des phénomènes de corrosion néfastes au fonctionnement de la pile. Pour des raisons économiques, de design et de performances mécaniques, le substrat 10 des plaques bipolaires 3 est généralement à base de métal, comme décrit ci-dessus en référence à la plaque électriquement conductrice 130, et plus particulièrement en acier inoxydable.

Des exemples de plaques bipolaires 3 sont maintenant décrit en référence aux figures 9 et 10. Notamment dans le cadre de son utilisation dans une pile à combustible, et de préférence dans une PEMFC, une telle plaque 3 présente avantageusement une forme rectangulaire voire carrée, avec une surface comprise entre 100 et 1000 cm², par exemple 220 cm². Son épaisseur peut varier entre 50 et 500 µm, par exemple 200 µm.

Cette plaque bipolaire 3 peut être fabriquée par mise en œuvre d'un procédé de fabrication d'une plaque bipolaire selon le deuxième aspect de l'invention. Ce procédé comprend tout d'abord la mise en œuvre d'une des variantes décrites plus haut du procédé de fabrication selon le premier aspect l'invention. Il consiste ensuite à assembler entre eux une pluralité de guides d'écoulement 1 et 1' fabriqués. Au moins un guide d'écoulement 1 est obtenu par mise en œuvre d'une des variantes décrites plus haut du procédé de fabrication selon le premier aspect l'invention, et de préférence au moins deux guides d'écoulement 1 et 1" est obtenu par mise en œuvre d'une des variantes décrites plus haut du procédé de fabrication selon le premier aspect l'invention. Les guides d'écoulement 1 et 11 situés de part et d'autres des substrats 10 10' résultent de préférence du procédé de fabrication selon le premier aspect l'invention. De façon équivalente, les guides d'écoulement 1 et 11 situés sur l'extérieur de l'assemblage résultent de préférence du procédé de fabrication selon le premier aspect l'invention. Deux exemples de telles plaques bipolaires 3 sont illustrés sur chacune des figures 9 et 10. Dans la suite, on considère à titre non limitatif que tous les guides d'écoulement sont obtenus par mise en œuvre d'une des variantes décrites plus haut du procédé de fabrication selon le premier aspect l'invention.

La figure 9 illustre une plaque bipolaire 3, formée par la superposition de guides d'écoulement 1, 1' et 1" obtenus par mise en œuvre d'une des variantes décrites plus haut du procédé de fabrication selon le premier aspect l'invention. Dans cet exemple, trois guides d'écoulement 1, 1' et 1" sont fabriqués à partir de trois substrats 10, 10' et 10" distincts. Ces trois guides d'écoulement comportent des nervures sur une unique face. Dans cet exemple, trois guides d'écoulement 1, 1' et 1" sont superposés, on peut prévoir en alternative d'autres configurations, par exemple les différentes configurations décrite précédemment. Le guide 1 supérieur présente des nervures en saillie depuis la face supérieure du substrat 10. Le guide intermédiaire 1' et le guide inférieur 1" présentent des nervures 31 en saillie depuis les faces inférieures des substrats 10' et 10" respectivement. Lorsque ces trois guides 1, 1', et 1" sont superposées, des canaux d'écoulement par exemple d'un réactif sont ménagés entre les nervures du guide supérieur 1, des canaux d'écoulement par exemple d'un liquide caloporteur sont ménagés entre les nervures du guidage intermédiaire 1', et des canaux d'écoulement par exemple d'un autre réactif sont ménagés entre les nervures du guide inférieur 1".

La figure 10 illustre une plaque bipolaire 3, formée par la superposition de guides d'écoulement 1, 1' et 1" fabriqués à partir de deux substrats 10 et 10' distincts par mise en œuvre d'une des variantes décrites plus haut du procédé de fabrication selon le premier aspect l'invention. Ici encore, trois guides d'écoulement 1, 1' et 1" sont superposés, on peut prévoir en alternative d'autres configurations, par exemple les différentes configurations décrite précédemment. Le guide supérieur 1 et le guide intermédiaire 1' partagent un même substrat 10 et forment une configuration dans laquelle le substrat 10 est une simple plaque électriquement conductrice 130. Cette plaque 130 comporte donc des nervures en saillie depuis ses deux faces. Le guide inférieur 1" présente des nervures en saillie depuis la face inférieure du substrat 10'. Comme sur la figure 9, lorsque les trois guides 1, 1' et 1" sont superposées, des canaux d'écoulement par exemple d'un réactif sont ménagés entre les nervures du guide supérieur 1, des canaux d'écoulement par exemple d'un liquide caloporteur sont ménagés entre les nervures du guide intermédiaire 1', et des canaux d'écoulement par exemple d'un autre réactif sont ménagés entre les nervures du guide inférieur 1".

### Autres exemples de guide d'écoulement associés à d'autres composants de réacteur électrochimique

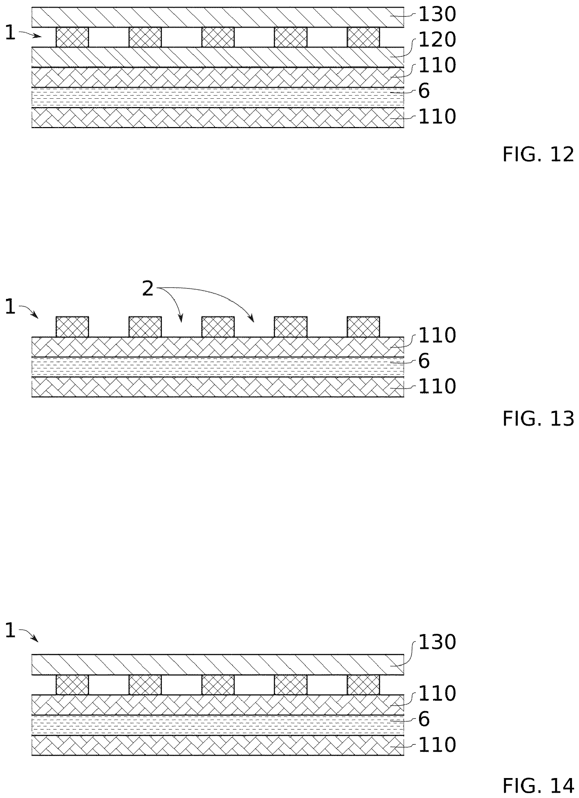

La figure 12 est une vue en coupe schématique d'un guide d'écoulement 1 obtenu par mise en œuvre d'une des variantes décrites plus haut du procédé de fabrication selon le premier aspect l'invention, associé à d'autres composants d'un réacteur électrochimique. Une plaque électriquement conductrice 130, telle que celle détaillée dans les modes de réalisation décrits en référence aux figures 7 et 8, peut être plaquée contre le sommet des nervures d'un guide d'écoulement 1. Un assemblage membrane-électrodes, incluant une membrane échangeuse d'ions 6 et deux électrodes 110, est plaqué contre une face inférieure d'une couche de diffusion gazeuse 120 supportant les nervures du guide d'écoulement.

La figure 13 est une vue en coupe schématique d'un guide d'écoulement 1 obtenu par mise en œuvre d'une des variantes décrites plus haut du procédé de fabrication selon le premier aspect l'invention, associé à d'autres composants d'un réacteur électrochimique. Le substrat 10 sur lequel les nervures ont été déposées est ici une électrode 110 solidarisée, préalablement ou postérieurement au dépôt, à une membrane échangeuse de protons 6 d'un assemblage membrane-électrodes. La composition peut être déposée sur une face de l'électrode 110, par exemple avec des paramètres d'impression similaires à ceux décrits plus haut.

La figure 14 est une vue en coupe schématique de l'assemblage illustré sur la figure 13, associé à un autre composant d'un réacteur électrochimique, à savoir une plaque électriquement conductrice 130. Cette dernière, qui peut être telle que dans les modes de réalisation décrits en référence aux figures 7 et 8, peut être plaquée contre le sommet des nervures s'étendant depuis la surface d'une des électrodes 110.

Au vu de la description qui précède, il apparaît clairement que l'invention propose, selon plusieurs aspects, une solution pour améliorer la durabilité d'un réacteur électrochimique comprenant un guide d'écoulement.

L'invention n'est pas limitée aux modes de réalisations précédemment décrits et s'étend à tous les modes de réalisation couverts par l'invention. La présente invention ne se limite pas aux exemples précédemment décrits. Bien d'autres variantes de réalisation sont possibles, par exemple par combinaison de caractéristiques précédemment décrites, sans sortir du cadre de l'invention. En outre, les caractéristiques décrites relativement à un aspect de l'invention peuvent être combinées à un autre aspect de l'invention. Notamment un procédé peut comprendre toute étape permettant d'obtenir une caractéristique de dispositif décrite et inversement un dispositif peut comprendre toute caractéristique résultant de la mise en œuvre d'une étape du procédé décrit.

Comme dit précédemment, la présente invention peut être appliquée à tout type de réacteurs électrochimiques nécessitant au moins un circuit fluidique, notamment pour l'amenée des réactifs et l'évacuation des produits de la réaction et/ou la circulation d'un fluide de refroidissement. Parmi ces réacteurs électrochimiques, l'on compte non seulement des piles à combustible, comme déjà mentionné plus haut, mais également, à titre d'exemple additionnel, des électrolyseurs.

## Revendications

1. Procédé de fabrication d'un guide d'écoulement (1, 1', 1") pour réacteur électrochimique (5), comprenant :
• une fourniture d'un substrat (10, 10', 10") présentant une première face (101) et une deuxième face (102),
• une formation d'au moins un canal d'écoulement (2) comprenant un dépôt par apport de matière, d'une composition comprenant :
o des charges de matériau électriquement conducteur,
o un polymère servant de liant, ou des précurseurs dudit polymère,
o un composé configuré pour absorber des cations métalliques, désigné « composé absorbeur de cations métalliques »,
o un solvant,
de façon à former des nervures (211) supportées par au moins l'une parmi la première face (101) et la deuxième face (102) du substrat (10), et
• un séchage du canal d'écoulement (2) déposé.

2. Procédé selon la revendication précédente, dans lequel la composition comprend, en poids par rapport au poids total de la composition, une proportion comprise entre 1 % et 4 % de composé absorbeur de cations métalliques.

3. Procédé selon la revendication précédente, dans lequel la composition comprend, en poids par rapport au poids total de la composition :
• une proportion comprise entre 30 % et 50 % de charges de matériau électriquement conducteur,
• une proportion comprise entre 1 % et 4 % de polymère servant de liant,
• une proportion comprise entre 45 % et 65 % de solvant, et
• lorsque le composé absorbeur de cations métalliques est un polymère servant de liant, la proportion comprise entre 1 % et 4 % de composé absorbeur de cations métalliques fait partie de la proportion de polymère servant de liant, et
• lorsque le composé absorbeur de cations métalliques n'est pas un polymère servant de liant, la proportion comprise entre 1 % et 4 % de composé absorbeur de cations métalliques est une proportion additionnelle à la proportion de polymère servant de liant.

4. Procédé selon l'une quelconque des revendications précédentes, dans lequel le composé absorbeur de cations métalliques est un polymère servant de liant, de préférence le composé absorbeur de cations métalliques est un ionomère, de préférence un polymère perfluorosulfoné.

5. Procédé selon l'une quelconque des revendications précédentes, dans lequel les charges de matériau électriquement conducteur sont choisies parmi le groupe constitué de noir de carbone, graphite, fibre de carbone ou leurs dérivés.

6. Procédé selon l'une quelconque des revendications précédentes, dans lequel le polymère servant de liant est choisi parmi le groupe constitué de : polyfluorure de vinylidène, l'alcool polyvinylique, le polyméthylméthacrylate, polyoxyde d'éthylène, polyéthylène téréphtalate, un polyacrylique, un polyimide, un polyétheréthercétone, un polyéthersulfone, une polyoléfine, le polyéthylène, un polymère de cellulose tel que la carboxyméthylcellulose ou les fibres de cellulose, un copolymères tel que le copolymère de polyfluorure de vinylidène et d'hexafluoropropylène, ou le copolymère de polyfluorure de vinylidène et de polyoxyde d'éthylène, un latex acrylique, un caoutchouc synthétique tel que le styrène-butadiène et le butadiène-acrylonitrile, un résine époxy, une résine polyuréthane, leurs dérivés et/ou leurs mélanges.

7. Procédé selon l'une quelconque des revendications précédentes, dans lequel le dépôt de la composition est un dépôt par impression, de préférence le dépôt de la composition est un dépôt par sérigraphie, et plus préférentiellement par sérigraphie par écran maillé

8. Procédé de fabrication d'une plaque bipolaire (3) pour réacteur électrochimique (5) comprenant :
• une fabrication d'au moins trois guides d'écoulement (1, 1', 1") sur au moins deux substrats (10, 10', 10"), au moins un guide d'écoulement (1) parmi les au moins trois guides d'écoulement (1, 1', 1") étant fabriqué par un procédé de fabrication selon l'une quelconque des revendications précédentes, et
• au moins un assemblage des au moins deux substrats (10, 10', 10") entre eux de sorte que :
o l'assemblage présente un des au moins trois guides d'écoulement (1') entre deux des au moins deux substrats (10, 10', 10") et deux autres des au moins trois guides d'écoulement (1, 1") de part et d'autre des au moins deux substrats (10, 10', 10"),
o au moins un guide d'écoulement parmi les deux guides d'écoulement de part et d'autre des au moins deux substrats (10, 10', 10") étant fabriqué par le procédé de fabrication selon l'une quelconque des revendications précédentes.

9. Guide d'écoulement (1, 1', 1") pour réacteur électrochimique (5) comprenant :
• un substrat (10, 10', 10") présentant une première face (101) et une deuxième face (102)
• au moins un canal d'écoulement (2) délimité latéralement par des nervures (211) supportées par au moins l'une parmi la première face (101) et la deuxième face (102) du substrat (10, 10', 10"),
**caractérisé en ce que** les nervures (211) sont faites d'un matériau composite comprenant :
• des charges de matériau électriquement conducteur,
• un polymère servant de liant,
• un composé absorbeur de cations métalliques.

10. Guide d'écoulement (1, 1', 1") selon la revendication précédente, dans lequel le matériau composite comprend, en poids sec par rapport au poids sec du matériau une proportion comprise entre 1 % et 10 % de composé absorbeur de cations métalliques

11. Guide d'écoulement (1, 1', 1") selon la revendication précédente, dans lequel le matériau composite comprend, en poids sec par rapport au poids sec du matériau :
• une proportion comprise entre 70 % et 98 % de charge de matériau électriquement conducteur,
• une proportion comprise entre 2 % et 30 % de polymère servant de liant, et
• lorsque le composé absorbeur de cations métalliques est un polymère servant de liant, la proportion comprise entre 1 % et 10 % de composé absorbeur de cations métalliques fait partie de la proportion de polymère servant de liant, et
• lorsque le composé absorbeur de cations métalliques n'est pas un polymère servant de liant, la proportion comprise entre 1 % et 10 % de composé absorbeur de cations métalliques est une proportion additionnelle à la proportion de polymère servant de liant.

12. Guide d'écoulement (1, 1', 1") selon l'une quelconque des trois revendications précédentes, dans lequel le composé absorbeur de cations métalliques est un polymère servant de liant, de préférence le composé absorbeur de cations métalliques est un ionomère, de préférence un polymère perfluorosulfoné.

13. Guide d'écoulement (1, 1', 1") selon l'une quelconque des quatre revendications précédentes, dans lequel les nervures (211) présentent une hauteur, prise selon une direction sensiblement perpendiculaire au plan d'extension principale du substrat (10, 10', 10"), supérieure ou égale à 100 µm.

14. Plaque bipolaire (3) pour réacteur électrochimique (5) comprenant un assemblage d'au moins trois guides d'écoulement (1, 1', 1"), supportés par au moins deux substrats (10, 10', 10"), les au moins deux substrats (10, 10', 10") étant assemblés entre eux de sorte que l'assemblage présente un des au moins trois guides d'écoulement (1') entre deux des au moins deux substrats (10, 10', 10") et deux autres des au moins trois guides d'écoulement (1, 1") de part et d'autre des au moins deux substrats (10, 10', 10"), au moins un guide d'écoulement (1) parmi les deux guides d'écoulement (1, 1") de part et d'autre des au moins deux substrats (10, 10', 10") étant un guide d'écoulement selon l'une quelconque des revendications 9 à 13.

15. Réacteur électrochimique (5) comprenant au moins un guide d'écoulement (1, 1', 1") selon l'une quelconque des revendications 9 à 13.
